# EUROPEAN PATENT APPLICATION

(11) **EP 1 253 455 A2**
(43) Date of publication of application: **30.10.2002**
(21) Application number: 01304190.0
(22) Date of filing: 09.05.2001
(51) Int. Cl.: G02B 6/44

(54) **An optical cable binder application device having a concentric drive motor**

(30) Priority: 27.04.2001 US 844776
(71) Applicant: Tensor Machinery Ltd., Montreal, Quebec 8T 2X9 (CA)
(72) Inventor: Kepes, George B., Quebec H4X 1A1 (CA); Marcelissen, John T., Quebec H9W 5H3 (CA)
(74) Representative: MacDougall, Donald Carmichael

(57) **Abstract**

A high-speed binder application device for wrapping binder material about a bundle of buffer tubes that encase a plurality of optical fibers includes a pair of opposite facing binder heads mounted on a pair of hollow shafts, each shaft being driven in rotation by a concentric drive motor mounted about the shaft. Each binder head includes a light-weight synthetic guide drum that dispenses binder material off a reel and onto the bundle of buffer tubes as it is advanced through the hollow shafts. The concentric mounting of the drive motors on the shafts eliminates shaft bending loads from drive belt tension and reduces vibrations at higher rotational speeds relative to belt-driven systems. The light weight and high strength of the synthetic guide drums allows the drums to be rotated at speeds in excess of 4000 RPM.

## Description

### FIELD OF THE INVENTION

The present invention relates to manufacturing fiber optic cable, and more particularly relates to an apparatus for the application of a binder about a bundle of optical fibers.

### BACKGROUND OF THE INVENTION

An increased volume of Internet use and the desire to send and receive data-intensive multimedia applications have greatly increased the demands put on the existing communications infrastructure. This has led to a push for greater bandwidth capabilities through the use of fiber optic cables in lieu of traditional copper cables. Increased demand for fiber optic cable has resulted in a need for ever-increasing production rates for cable winding machines.

Fiber optic cable of various configurations are in use for communications. In many commonly used types of cables, the optical fibers are encased in protective buffer tubes which are formed of a flexible plastic material. Such fiber optic cables also often include a central reinforcing member about which the buffer tubes are arranged to provide strength to the cable. After the buffer tubes have been positioned around the central reinforcing member, yarn-like binders are wound around the buffer tubes to retain the buffer tubes in position against one another and the central reinforcing member. A plastic sheath or jacket is then provided over the binder and buffer tubes for added protection.

Various winding techniques for helically winding buffer tubes around the central reinforcing member have been employed. One advantageous method is to arrange the buffer tubes around the central reinforcing member using a reverse oscillating lay technique. The buffer tubes are provided from non-orbiting supply sources and advanced in a direction generally parallel to the central reinforcing member. One or more lay plates are provided having a central opening for the central reinforcing member and a plurality of radially spaced openings about the central reinforcing member. From the most downstream lay plate, the buffer tubes converge towards the central reinforcing member at a closing point and are laid against the central reinforcing member in an oscillating lay. Typically, eight turns are applied in one direction before reversing to the opposite direction. This technique is also known as "S-Z" stranding in reference to the appearance of the oscillated buffer tubes once engaged against the central reinforcing member.

The buffer tubes and central reinforcing member are then advanced through an aluminum or steel binder head of a binder device where the binder is wound around the buffer tubes. The binder device may also include a second binder head positioned downstream of the first binder head for winding a second binder around the buffer tubes in an opposite direction. A binder head of this type is illustrated in U.S. Pat. No. 4,325,212 to Hope nee Swiecicki. As illustrated in Figure 2, the binder head includes a binder reel rotatably supported on a hollow shaft which surrounds the fiber optic cable. The shaft is supported at its downstream end on bearings and has an upstream free end. The shaft and the binder reel are rotated by a conventional belt-and-pulley drive. As the reel is rotated, one or more binder guides pay out the binder over the free end of the shaft so that it can be wound around the buffer tubes. A capstan is typically provided downstream of the binder heads for pulling the fiber optic cable through the apparatus.

Current cable winding machines are limited in their production rates because the binder has to run at high speeds to get a meaningful cable production rate. In addition, the tension in the binder as it is applied must fall within stringent tolerances on the order of ±10%. Typically, binders are applied on the cable at a pitch, or lay length, of between 15 mm and 25 mm, most commonly 20 mm. Actual running speeds of binder application machines is currently limited to 3600 to 3800 RPM, which translates into a cable line production speed of about 76 meters per minute at a 20 mm pitch. An increase of the rotational speed of the binder applicator to even 5000 RPM would result in a 32% cable line production speed increase at the same 20 mm lay length.

It is generally difficult to achieve rotational speeds that exceed 4000 RPM with many existing binder devices because of a concomitant increase in centrifugal forces and vibration loads on the binder device. Such high centrifugal forces may break or damage the binder device. Aluminum binder heads typically weigh over 8 kg each and may structurally fail due to centrifugal forces at a rotational speed of 4000 RPM which results in a loss in cable production time.

Beyond binder head failure, the useful life of the binder device can be reduced by the existence of centrifugal forces, vibrations and other loads. Vibration can result from various sources including unbalance of one or more of the drive components for the binder head, or of the binder head itself. For instance, an unbalance of one gram located at a 100 mm radius and rotating at 5000 RPM results in a centrifugal force of 6.24 lbs. In some existing binder devices, the vibrations of the drive components have harmonics at around 3200 to 3400 RPM that coincide with the harmonics of the tubular shaft, which can cause a forced resonance of the shaft that may lead to failure of the shaft. In addition, the vibration loads and the weight of the binder head cantilevered from the end of the shaft degrade the bearings supporting the shaft. Tension in the pulley of the belt-and-pulley drive system adds to the detrimental loads on the shaft and bearings.

Therefore, it would be desirable to increase fiber optic cable production speeds by increasing the speed of binder application without decreasing the useful life of the binder applicator or the creation of a situation where vibrations cause failure of the metal shaft of the binder applicator.

### SUMMARY OF THE INVENTION

The present invention addresses the above needs and achieves other advantages by providing a high-speed binder device for binding together various components of a cable, especially a fiber optic cable, in which the binder head is driven by a concentric motor and drive system that does not require a cantilever mounting or belts and pulleys, thereby reducing eccentric and lateral loads on the shaft of the binder device. A reduction in eccentric loads on the binder device reduces the occurrence of vibrational failure at high rotational speeds.
Additionally, elimination of the conventionally used drive belt results in a substantial reduction in lateral loads imposed on the shaft bearings, which can increase the life of the bearings. The increased rotational speeds allowed by the present invention can result in a substantial increase in cable line production speeds. Increased production speeds are desirable considering the increasing demand for fiber optic cable.

The high-speed binder device includes a frame supporting a hollow shaft. The hollow shaft defines a central opening through which the cable is advanced. The hollow shaft is rotatably supported by at least two bearings that are spaced apart in the machine direction and mounted to the frame. A binder reel is supported on the shaft and has a supply of binder material wound on the binder reel. A guide drum is fixed about the shaft for guiding binder from the reel onto the cable. A rotary drive is included and comprises a stator and a rotor. The stator is mounted about the shaft and is fixed to the frame, preferably at a location between two bearings. The rotor is fixed to the rotatable shaft concentrically thereabout so that, when the drive is energized, the rotor, and hence the shaft and guide drum, are caused to rotate such that binder is unwound from the binder reel and wrapped around the advancing cable. Preferably, the rotary drive comprises an electric drive motor, the stator comprising a coil and the rotor comprising permanent magnets. In preferred embodiments of the present invention, the electric drive is capable of operating at variable speeds.

In one embodiment, the guide drum comprises a composite material made of carbon fiber that allows the drum to operate at speeds greater than 4,000 RPM. More particularly, the guide drum defines a tubular shape having a substantially cylindrical wall formed of composite material with a radial thickness of 1/8 of an inch, and has an open end and a closed end. The closed end comprises an aluminum hub to which a cylindrical wall is adhered with an epoxy material. Preferably, the guide drum weighs approximately 3.6 lbs.

The present invention has several advantages. The concentric motor and drive system reduces the eccentric loads on the shaft of the binder device, which reduces the amplitude and incidence of damaging vibrations. A reduction in vibration loads results in an increase in the life of the binder device and a reduction in the likelihood of shaft failure. A smoother running binder device is also capable of achieving higher rotational speeds without excessive wear or damage to the binder device.

### BRIEF DESCRIPTION OF THE DRAWINGS

Having thus described the invention in general terms, reference will now be made to the accompanying drawings, which are not necessarily drawn to scale, and wherein:
FIG. **1** is a schematic view of a high-speed binder application device according to the present invention;
FIG. **2** is a cutaway perspective view of a fiber optic cable wrapped in binder material according to the present invention;
FIG. **3** is an enlarged sectional view of the cable illustrated in FIG. **2** and taken along lines **3―3;**
FIG. **4A** is a partial sectional view of the first binder head and concentric motor according to the present invention; and
FIG. **4B** is a partial sectional view of the second binder head and concentric motor according to the present invention.

### DETAILED DESCRIPTION OF THE INVENTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

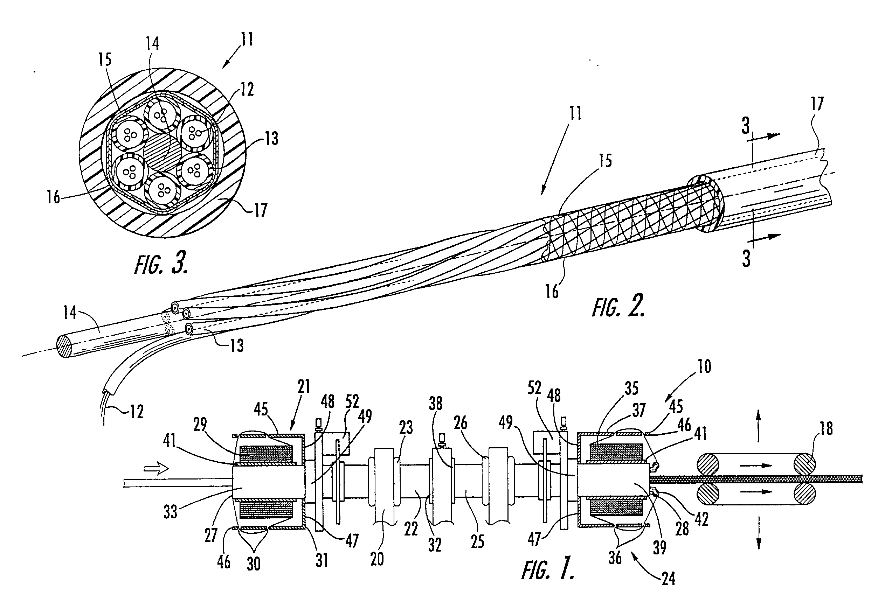

A high-speed binder device **10** according to the present invention is illustrated in FIG. **1.** The device **10** is used to manufacture fiber optic cable **11** as shown in FIGS. **2** and **3.** The individual optical fibers **12** are typically formed of glass or other light-transmitting material and thus can be quite fragile. Accordingly, one or more optical fibers are encased in several protective buffer tubes **13.** The buffer tubes **13** are formed of a flexible plastic material and may be color coded for ease of installation.

The fiber optic cable **11** also often includes a central reinforcing member **14** about which the buffer tubes **13** are arranged to provide strength to the cable. At least one pair of counterrotating yam-like binders **15, 16** is wound around the buffer tubes **13** to retain the buffer tubes in position against the other buffer tubes and the central reinforcing member **14.** One preferred binder material is multifilament untwisted polyester yarn, although other binder materials could be used including other yarn types or tape. A plastic sheath or jacket **17** is then provided over the binders **15, 16** and buffer tubes **13** for added protection. The binder device **10** could also be used to wrap copper or other types of cable.

As described in commonly assigned U.S. Patent No. 5,826,419, incorporated herein by reference, the central reinforcing member **14** is unwound from a supply spool (not shown) and advanced toward the device **10.** Several buffer tubes **13** are advanced from respective supply spools (not shown) into a spaced arrangement with the central reinforcing member **14.** The buffer tubes **13** are advanced in a direction generally parallel to the central reinforcing member **14** and through one or more lay plates (not shown). The lay plates have a central opening for the central reinforcing member **14** and a plurality of radially spaced openings for the respective buffer tubes **13.** The lay plates are rotated in a predetermined oscillating fashion about the central reinforcing member **14.** From the most downstream lay plate, the buffer tubes **13** converge towards the central reinforcing member **14** at a closing point and are laid against the central reinforcing member in an oscillating lay so as to form a cable core structure. The cable core structure is advanced through the high-speed binder device **10** by the pull of a master capstan (not shown). Additionally, an anti-rotation capstan **18** is provided to prevent rotation of the cable core about its axis.

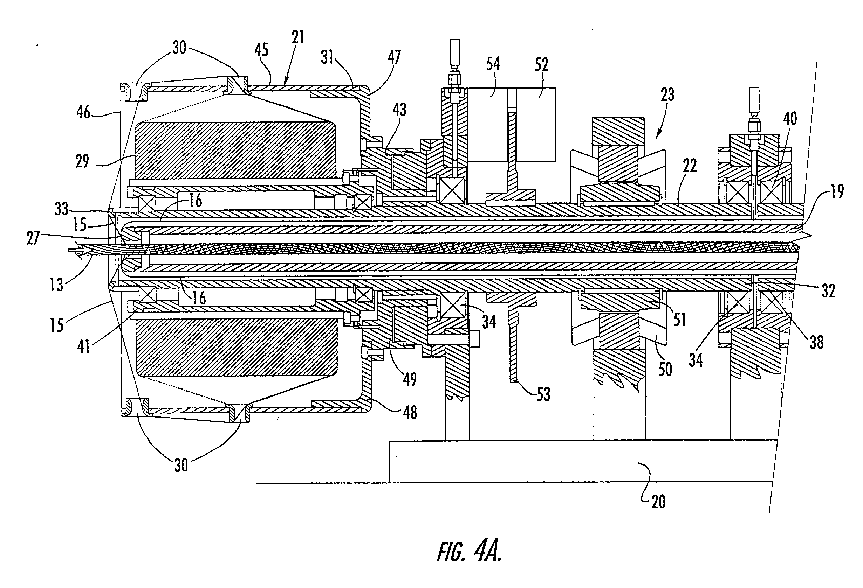

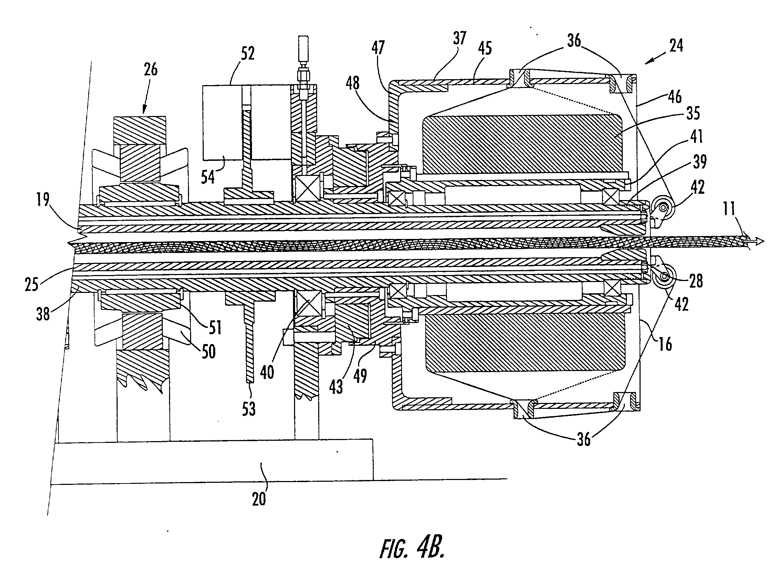

As shown in FIGS. **4A** and **4B,** the buffer tubes **13** and central reinforcing member **14** pass through the central passage of a hollow center shaft **19** which is fixed to a frame **20.** A first binder head **21** is mounted on a first binder shaft **22** that concentrically surrounds the center shaft **19.** The first binder shaft **22** is rotatably driven by a first concentric motor **23** to dispense binder **15** onto the buffer tubes **13** at an upstream entrance **27** of the first shaft **22.** A second binder head **24** is mounted on a second binder shaft **25** concentrically surrounding the center shaft **19** and rotatably driven by a second concentric motor **26** to dispense binder **16** onto the partially wound buffer tubes **13** as they leave a downstream exit **28** of the second shaft **25.**

The first binder head **21** has a binder reel **29** having a supply of binder 15 wound thereon. The first binder head **21** also includes at least a pair of binder guides **30** which are supported on a light-weight guide drum **31.** The binder guides **30** are preferably formed of a long-wearing ceramic material and include adjacent inwardly and outwardly facing guides so that the first binder **15** can be threaded in a manner illustrated in FIG. **4A.** The first binder reel **29** is supported on the first binder shaft **22** which is in turn rotatably supported on the frame **20.** The first binder shaft **22** has a downstream end **32** rotatably supported on the frame **20** and an opposite upstream free end **33.** The downstream supported end **32** advantageously is supported by a bearing **34,** and an additional bearing **34** supports the shaft **22** at a location intermediate the two ends **32, 33.** It will be appreciated that the first binder **15** must be passed into the free end **33** of the binder shaft **22** so that it may be wound under tension around the buffer tubes **13.**

The second binder head **24** also includes a binder reel **35** having a supply of binder **16** wound thereon and at least a pair of binder guides **36** supported on a second light-weight guide drum **37** such that the second binder **16** can be threaded in the manner illustrated in FIG. **4B**. The second binder reel **35** is supported on the second binder shaft **25** which is, in turn, rotatably supported on the frame **20.** The second binder shaft **25** has an upstream end **38** rotatably supported by a bearing **40** mounted on the frame **20** and an opposite downstream free end **39.** The shaft **25** is advantageously supported by an additional bearing **40** intermediate of the two ends **38, 39** of the shaft. The second binder **16** is passed over a pair of pulleys **42** mounted on the second binder shaft **25,** extends into the space defined between the second binder shaft and the center binder shaft **9** and extends in the direction of the first binder head **21.** The second binder **16** then exits the space defined between first binder shaft **22** and the center binder shaft **9** and wraps over the edge of the center binder shaft **9** and onto the partially wound buffer tubes **13** entering the binder shaft. Both yarns **15** and **16** are wound onto the buffer tubes in close proximity to each other (e.g., ¼ inch), but preferably do not touch. Each of the binder heads also includes a brake **52** with a disc **53** and a caliper **54** for stopping the rotation of the shafts **22, 25.** Other brake designs could also be used, such as drum brakes.

Each of the binder heads includes a freely rotatable spool **41** on which the respective binder reels **29, 35** are mounted. The spools **41** are mounted concentrically about the respective binder shafts, so as to be freely rotatable on the binder shafts **22, 25** so that the binders **15, 16** are easily paid off from the binder reels. Electromagnetic brakes **43** are provided on the spools **41** for binder tension control. Preferably sensors (not shown) sense the position and speed of the spools **41.** Different types of sensors, such as electromagnetic or optical sensors, are common to the art and are therefore not described in more detail herein. Because the open ends of the binder heads **21, 24** face in opposite directions, replacement reels (not shown) can be easily advanced over the fiber optic cable into the position in the binder head formerly occupied by the expended reel after the expended reel has been cut away.

The light-weight guide drums **31, 37** are comprised of a composite material, such as a carbon fiber material, and weigh approximately 3.6 lbs as more fully described in U.S. Patent Application serial no. , filed concurrently herewith and which is incorporated herein by reference. The light-weight guide drums **31, 37** preferably are comprised at least in part of a composite material having a high strength-to-weight ratio, such as a carbon fiber material. In a preferred embodiment, each guide drum weighs approximately 3.6 lbs. The guide drums **31, 37** have a tubular shape and are formed by a substantially cylindrical wall **45** of lightweight material such as fiber composite with a radial thickness of approximately 1/8 of an inch. The guide drum has an open end **46** and a closed end **47.** The closed end can comprise an aluminum hub **48** to which the fiber composite wall **45** is adhered with an epoxy material. The aluminum hub **48** includes a flange **49** which is attached to the binder shaft. The low weight of the guide drums **31, 37** virtually eliminates the need for balancing of the drums. In addition, the cylindrical wall configuration results in an even distribution of centrifugal forces through the guide drums **31, 37.** The high strength to weight ratio of the carbon fiber guide drums **31, 37** allows them to be rotated at speeds in excess of 4000 RPM, and even 5000 RPM, without failing.

In alternative embodiments, the guide drums **31, 37** could be constructed of other light-weight synthetic materials such as high-strength plastic. The weight of the lightweight guide drum can vary and depends, in part, upon the size of the guide drum and the proportion of the guide drum constructed from the lightweight materials. Preferably, the guide drum weighs less than 4 lbs. in order to facilitate sustained operation at rotational speeds in excess of about 3800 RPM.

The first and second concentric motors **23, 26** are also suitable for high-speed operation. Each concentric motor includes a stator **50** surrounding a rotor **51** as more fully described in U.S. Patent Application serial no. , filed concurrently herewith and which is incorporated herein by reference. Each stator **50** comprises an electric coil or coils and is fixed to the frame **20.** Each rotor **51** is mounted concentrically within its respective stator **50** and is fixed to its respective binder shaft **22** or **25.** When the electric coils of the stators **50** are energized, the rotors **51** rotate the binder shafts **22, 25.** Rotating the binder shafts also rotates the guide drums **31, 37** which unwind the binder from the binder reels **29, 35** and wrap the binders **15, 16** about the advancing bundle of buffer tubes **13.** The concentric mounting of each motor reduces or eliminates problems associated with belt-driven arrangements such as large bending loads on the shafts **22, 25** caused by belt tension, and the mounting of each motor between two supporting bearings eliminates the weight of the motor being cantilevered off of the shaft. The reduction of the loads on each shaft reduces the incidence of vibrations and makes for relatively smooth operation, especially at speeds higher than 4000 RPM. The concentric motors **23, 26** can be run at controlled variable rotational speeds as desired.

The light-weight guide drum construction could be advantageously used in other types of binder devices. In another embodiment, a single light-weight guide drum and concentric motor could be used in a single-head binder device. The single head binder device, like the double-head device described above, can be used for wrapping various binding materials including tapes about a cable wrapping tape such as MYLAR® tape or water-swellable cable wrapping tapes, or yarns of various types (e.g., strength yarns, water-swellable yarns, etc.). In a single-head binder device, the cable can pass through the center shaft in either direction. The single-head binder device can also have a supply of spare binder reels ready to replace spent binder reels as described above.

The light-weight guide drum construction could also be employed in a dual head binder system that has a stranding point at the exit of the binder device, such as described in U.S. Pat. No. 5,826,419 to Shelander et al., commonly assigned and incorporated herein by reference. This binder device includes a pair of binder heads concentric with, and surrounding, an oscillator shaft. The oscillator shaft has a plurality of openings for receiving and guiding longitudinally advancing buffer tubes into an oscillating lay. This allows the closing point for the buffer tubes to be downstream of the binder heads and closely adjacent to a locking capstan. As in the first embodiment, the binder heads are facing in opposite directions which allows for easy replacement of spent binder reels.

In another embodiment, the stranding point is between two dual-binder devices and an anti-torsion capstan is downstream from both of the binder devices. The first two binders are rotated together by a concentric motor in one direction, while the second two binders are driven by a second concentric motor in the opposite direction, to produce a double-wrapped cable.

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A high-speed binder device for binding together various components of a cable advancing in a machine direction, said device comprising:
a frame;
a hollow shaft defining a central opening through which the cable is advanced, said hollow shaft being rotatably supported on at least two bearings that are spaced apart in the machine direction and mounted to said frame;
a binder reel supported on said shaft and having a supply of binder wound on the binder reel;
a guide drum supported on said shaft for paying out binder from the binder reel and wrapping the binder around the cable; and
a rotary drive comprising;
a stator fixed to said frame so as to surround said shaft, and
a rotatably driven rotor fixed to said rotatable shaft concentrically thereabout and within said stator so that, when said rotary drive is operated, the shaft with the guide drum mounted thereon is caused to rotate such that binder is unwound from the binder reel and wrapped around the advancing cable.

2. A high-speed binder device as defined in Claim 1, wherein said rotary drive comprises an electric drive motor, the stator comprising a coil.

3. A high-speed binder device as defined in Claim 2, wherein the electric drive motor comprises a variable-speed motor.

4. A high-speed binder device as defined in Claim 1, wherein said guide drum comprises a composite material.

5. A high-speed binder device as defined in Claim 4, wherein said guide drum comprises carbon fiber.

6. A high-speed binder device as defined in Claim 1, wherein said rotary drive is mounted between two bearings.

7. A high-speed binder device as defined in Claim 1, wherein the guide drum and the rotary drive are mounted on opposite sides of one of the bearings.

8. A high speed binder device as defined in Claim 1, wherein the guide drum defines an upstream end and a downstream end and the guide drum is rotatably supported on said shaft at only one of said ends.

9. A high speed binder device as defined in Claim 1, further comprising a second hollow shaft supported by at least two additional bearings, a second binder reel supported on the second shaft, a second guide drum supported on the second shaft, and a second rotary drive mounted about the second shaft, the two hollow shafts being axially aligned end-to-end.

10. A high-speed binder device as defined in Claim 9, wherein each rotary drive is mounted between two bearings.

11. A high speed binder device as defined in Claim 10, wherein each guide drum and the rotary drive therefor are located on opposite sides of one said bearing.

12. A high-speed binder device as defined in Claim 1, further comprising a brake located between the guide drum and the rotary drive.

13. A method for binding together a plurality of components of a cable at a high speed, said method comprising the steps of:
advancing the cable components through a hollow rotatable shaft, the shaft supporting a binder reel having a supply of binder wound thereon;
supporting a guide drum on the rotatable shaft and around the binder reel for paying out binder from the binder reel; and
rotationally driving the guide drum so that the binder is wrapped around the cable components at a high rate of speed, said driving step comprising:
mounting a stator having an electric coil around the rotatable shaft, fixing a rotor to the rotatable shaft concentrically thereabout, and
energizing the electric coil to cause the rotor to rotate, thereby causing the rotatable shaft and the guide drum to rotate so that binder is unwound from the binder reel and wrapped around the advancing cable components to form a cable.

14. A method as defined in Claim 13, wherein said driving step comprises varying the rotational speed of the guide drum.

15. A method as defined in Claim 13, wherein said rotationally driving step comprises driving the guide drum at a rotational speed of at least 4,000 rpm.

16. A method as defined in Claim 13, wherein said rotationally driving step comprises driving the guide drum at a rotational speed of approximately 5,000 rpm.

17. A method as defined in Claim 13, wherein said rotationally driving step further comprises driving a guide drum comprised of a composite material.

18. A method as defined in Claim 17, wherein said rotationally driving step further comprises driving a guide drum comprised of carbon fiber.

19. A method as defined in Claim 13, further comprising the step of supporting the rotatable shaft on at least two bearings that are spaced apart.

20. A method as defined in Claim 19, wherein the stator and rotor are mounted between two bearings.

21. A method as defined in Claim 20, wherein said step of supporting the guide drum includes supporting the guide drum on an opposite side of one of the bearings from the stator and rotor.

22. A method as defined in Claim 13, wherein said guide drum defines an upstream end and a downstream end and said step of supporting the guide drum includes supporting the guide drum on said shaft at only one of said ends.

23. A method as defined in Claim 13, further comprising the steps of advancing the cable components through a second hollow rotatable shaft, the second shaft supporting a second binder reel having a supply of binder wound thereon, supporting a second guide drum on the second rotatable shaft and around the second binder reel, and rotationally driving the second guide drum including mounting a second stator having a second electric coil around the second rotatable shaft, fixing a second rotor to the second rotatable shaft concentrically thereabout, and energizing the second electric coil to cause the second rotor to rotate, thereby causing the second rotatable shaft and the second guide drum to rotate so that binder is unwound from the second binder reel and wrapped around the advancing cable components to form the cable.

24. A method as defined in Claim 23, further comprising the step of supporting each rotatable shaft on at least two bearings spaced apart.

25. A method as defined in Claim 24, wherein the stator and rotor are mounted between two bearings.

26. A method as defined in Claim 25, wherein the steps of supporting the first and second guide drum include supporting each guide drum and the stator and rotor therefor on opposite sides of one said bearing.

27. A method as defined in Claim 13, further comprising a step of positioning a brake between the guide drum and the stator and rotor.
